(19) Europäisches Patentamt
European Patent Office
Office européen des brevets

(11) EP 2 093 667 A1

(12) EUROPEAN PATENT APPLICATION
published in accordance with Art. 153(4) EPC

(43) Date of publication:
26.08.2009 Bulletin 2009/35

(51) Int Cl.:
G06F 9/45 (2006.01)

(21) Application number: 06834720.2

(22) Date of filing: 14.12.2006

(86) International application number:
PCT/JP2006/324966

(87) International publication number:
WO 2008/072334 (19.06.2008 Gazette 2008/25)

(84) Designated Contracting States:
AT BE BG CH CY CZ DE DK EE ES FI FR GB GR
HU IE IS IT LI LT LU LV MC NL PL PT RO SE SI
SK TR

(71) Applicant: Fujitsu Limited
Kawasaki-shi, Kanagawa 211-8588 (JP)

(72) Inventor: YAMASHITA, Koichiro
Kawasaki-shi
Kanagawa 211-8588 (JP)

(74) Representative: Holtby, Christopher Lawrence
Haseltine Lake LLP
Lincoln House, 5th Floor
300 High Holborn
London WC1V 7JH (GB)

(54) COMPILE METHOD AND COMPILER

(57) A compiling method for compiling, by a computer, software that is processed time-sequentially and outputs an intermediate result at predetermined timings, includes an extracting step extracting a process block related to parallel processing and conditional branch from a processing sequence included in a source code of the software, and a generating step automatically generating an execution code by restructuring the extracted process block.

FIG.5

**Description**

TECHNICAL FIELD

The present invention generally relates to compiling methods and compilers, and more particularly to a compiling method and a compiler that automatically generate execution codes of software in an embedded equipment.

BACKGROUND ART

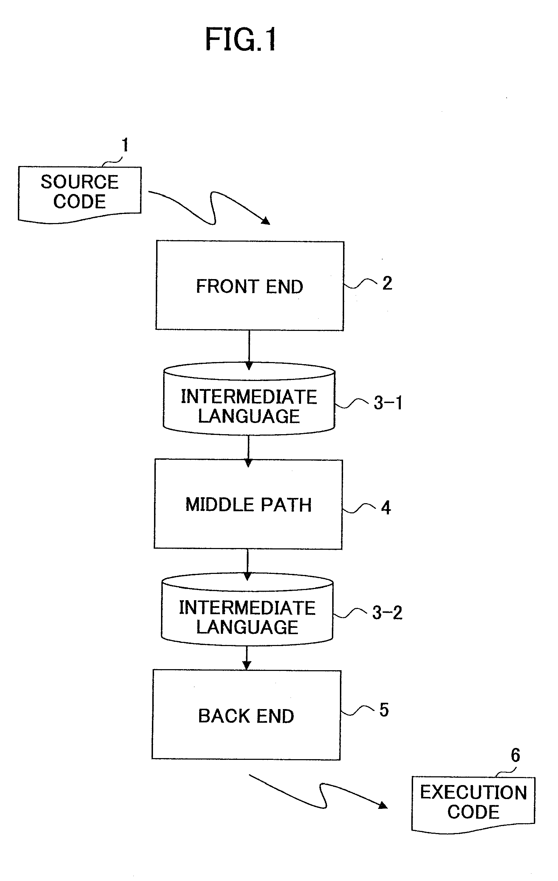

FIG. 1 is a diagram illustrating a structure of a conventional compiler that generates execution codes of software in an embedded equipment. The compiler illustrated in FIG. 1 optimizes the execution codes in order to efficiently execute the software of the embedded equipment as a single application. The compiler illustrated in FIG. 1 includes an interpreting device (front end) 2, an optimizing device (middle path) 4, and a code generating device (back end) 5. The front end 2 generates an intermediate language 3-1 from a source code 1, and the middle path 4 generates an intermediate language 3-2 from the intermediate language 3-1. The back end 5 generates an optimized execution code 6 from the intermediate language 3-2. During the interpreting process of the compiling, the middle path 4 performs a simple restructuring such as deletion of unnecessary variables, packing of instructions, and inline expansion of a call function.

The restructuring for the optimization of the execution code performs deletion of the instruction code or simple replacement, and does not perform a restructuring that modifies the structure of the processing sequence itself described in the source code 1.

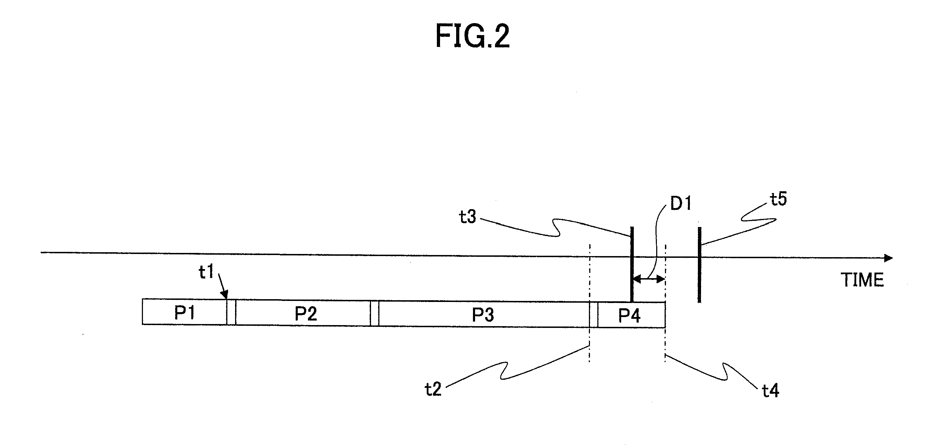

In the case of software that performs a time-sequential process, after execution of a process such as dynamic image processing and communication process is started, an intermediate computation result is output periodically at predetermined times regardless of a throughput of a Central Processing Unit (CPU). When such software described in time sequence is compiled in the compiler illustrated in FIG. 1 to generate the execution code, even if the total amount of computations from the start to end of the process corresponds to the throughput of the CPU, the process may not be performed in time and a delay may occur depending on the sequence in which processes P3 and P4 are started as illustrated by an example in FIG. 2. FIG. 2 is a diagram for explaining the delay of a time-sequential process. In FIG. 2, P1 through P4 denote processes, t1 denotes a start condition judging time, t2 denotes an actual end time of the process P3, t3 denotes an expected end time of the process P4, t4 denotes an actual end time of the process P4, and t5 denotes an expected end time of the process P3. In this case, the actual end time t4 of the process P4 occurs after the expected end time t3 of the process P4, and a delay D1 is generated.

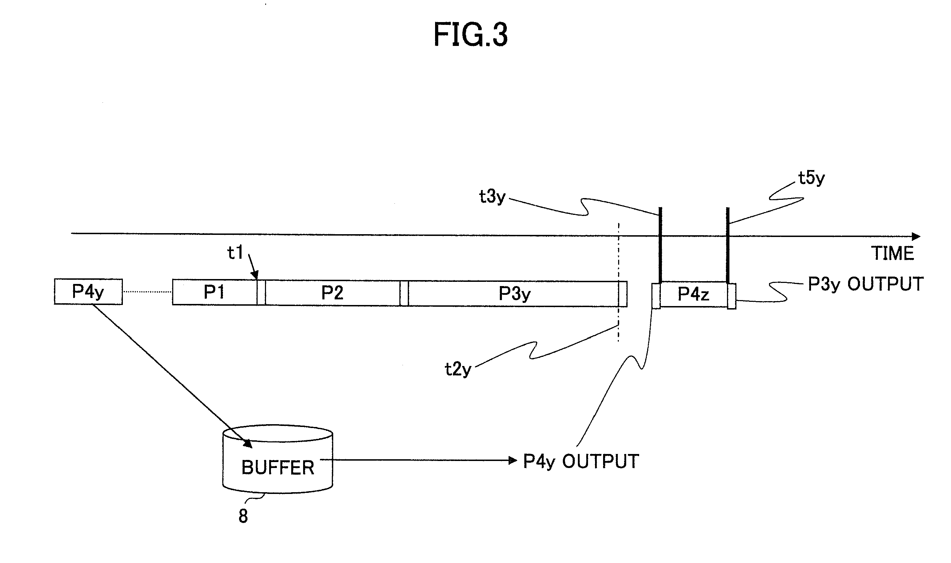

In general, even if the throughput of the average CPU is sufficient as described above, a state where the throughput of the CPU becomes insufficient from the point of view of local processing may occur, and thus, the software defines a buffer 8 in a design stage as illustrated in FIG. 3 in order to avoid the processing delay. FIG. 3 is a diagram for explaining avoiding the delay of the time-sequential process. In FIG. 3, those parts that are the same as those corresponding parts in FIG. 2 are designated by the same reference numerals, and a description thereof will be omitted. In FIG. 3, P3y and P4y respectively denote the processes P3 and P4 that are executed yth (in the order), P4z denotes the process P4 executed zth, t2y denotes an actual end time of the process P3y, t3y denotes an expected end time of the process P4y, and t5y denotes an expected end time of the process P3y.

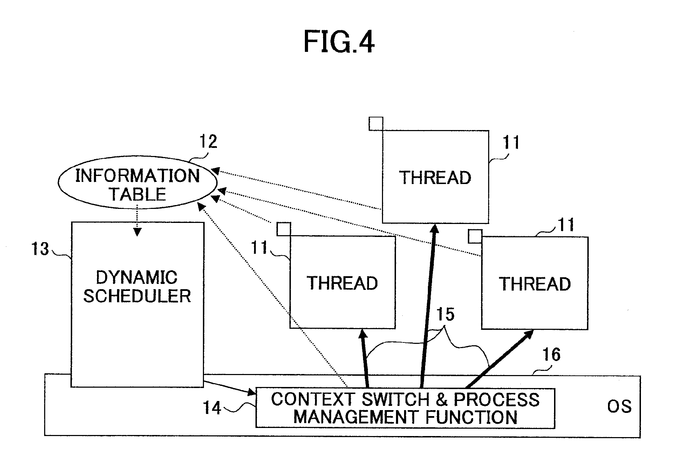

FIG. 4 is a diagram illustrating an image of a conventional dynamic scheduler. FIG. 4 illustrates tasks or threads 11, an execution information table 12 receiving reports from the tasks or threads 11, a dynamic scheduler 13 performing a scheduling based on the information table 12, a context switch and process managing function 14 within an Operating System (OS) 16, and switches 15 instructed from the dynamic scheduler 13. When efficiently executing a plurality of tasks or threads 11 in parallel (or simultaneously) in the conventional embedded equipment, the dynamic scheduler 13 causes an application to have a dynamic profiling function and to report the amount of memory or CPU used to the OS 16 at all times. The dynamic scheduler 13 dynamically defines a priority of the tasks or threads 11 by referring to the information of the information table 12 that is constantly collected, in order to switch 15 the tasks or threads 11 by the context switch and process managing function 14 of the OS 16.

Therefore, the dynamic scheduler 13 for efficiently executing the plurality of tasks or threads 11 is formed by software that performs an operation different from that of the application which links to the OS 16, that is, an external (or externally connected) scheduler. For this reason, from the point of view of the amount of computations of the CPU required by the target software, the dynamic scheduler 13 is regarded as a pure overhead.

Accordingly, in order not to generate the overhead by the dynamic scheduler 13 which defines the priority by referring to the information table 12, there is a general technique which uses a scheduler having a small overhead by not actively operating according to the priority which is based on round robin or is fixedly set in advance. However, this general technique cannot efficiently execute all software.

A technique which embeds a static scheduler mechanism defining the execution start within the execution code may be used in order to generate the execution code which minimizes the processing time and avoids the overhead caused by the dynamic scheduler 13.

As a substitute means of not dynamically reporting the amount of memory or CPU used, the static scheduler focuses on a branch instruction at the time of compiling, and determines the scheduling at the time of the compiling based on an anticipated information table in which a branch prediction coefficient is multiplied with respect to the amount of memory or CPU used by a dependent process which jumps from the branch instruction.

The overhead of the static scheduler with respect to the scheduling at the time of the execution is small with respect to the dynamic scheduler which dynamically optimizes the process, but in the case of software having a structure such that the amount of computations or the amount of data to be processed changes for every execution, the scheduling accuracy deteriorates and the processing time may not be minimized. For this reason, the static scheduler is generally used in software for which the amount of computations to be performed by processes in the CPU is known in advance.

The conventional compiler analyzes the data dependency or the control dependency when optimizing the code level or compiling the source code that is described in time sequence, segments the process that are executable in parallel, and generates the execution code with respect to CPUs arranged in parallel. The process executable in parallel is extracted as much as possible from the source code described in the time sequence, in order to generate the execution code which can minimize the processing time from the start to end of the execution.

The dynamic scheduler is proposed in Patent Documents 1 and 2, for example. In addition, a multi-level scheduler is proposed in the Patent Document 2, for example.

Patent Document 1: Japanese Laid-Open Patent Publication No.6-110688
Patent Document 2: Japanese Laid-Open Patent Publication No.2003-84989
Patent Document 3: Japanese Laid-Open Patent Publication No.8-212070

DISCLOSURE OF THE INVENTION

PROBLEM TO BE SOLVED BY THE INVENTION

The software execution environment of the embedded equipment is changing with performance-enhanced OS and compiling environment, and it is becoming possible for general-purpose software conventionally running on a Personal Computer (PC), a work station or the like to run on the embedded equipment. On the other hand, in the embedded equipment, there are demands to efficiently execute the target software using the limited resources such as the CPU and the memory.

In the conventional embedded equipment, the compiler having the code optimizing level that does not involve restructuring or, the scheduler is started in the case of the software structure in which a plurality of tasks or threads are started.

On the other hand, in order to more efficiently operate the software, a person implementing the software to the target embedded equipment must manually perform a transfer operation suited for the target embedded equipment.

Accordingly, under the limited software execution environment of the embedded equipment, when executing the software, particularly the application in the source code described in the time sequence and performing the time-sequential process to output the intermediate computation result periodically at the predetermined times, there are demands for the compiler to automatically generate the execution code which can achieve a small overhead, a high scheduling accuracy, and efficient utilization of the resources such as the CPU and the memory.

Accordingly, it is one object of the present invention to provide a novel and useful compiling method and compiler, which can efficiently generate the execution code of the software even under the limited software execution environment.

MEANS OF SOLVING THE PROBLEM

One aspect of the present invention is to provide a compiling method for compiling, by a computer, software that is processed time-sequentially and outputs an intermediate result at predetermined timings, characterized in that there are provided an extracting step extracting, by the computer, a process block related to parallel processing and conditional branch from a processing sequence included in a source code of the software; and a generating step automatically generating, by the computer, an execution code by restructuring the process block that is extracted.

One aspect of the present invention is to provide a compiler for compiling, by a computer, software that is processed time-sequentially and outputs an intermediate result at predetermined timings, characterized in that there are provided a front end configured to interpret, by the computer, a source code of the software into a first intermediate language and to store the first intermediate language in a storage unit; a middle path configured to extract, by the computer, a process block related to parallel processing and conditional branch from a processing sequence included in the source code based on the first intermediate language stored in the storage unit, and to restructure the process block that is extracted and generate a second intermediate language and to store the second intermediate language in the storage unit; and a back end configured to automatically generate, by the computer, an execution code based on the second intermediate language stored in the storage unit.

EFFECTS OF THE INVENTION

According to the present invention, it is possible to realize a compiling method and a compiler which can efficiently generate the execution code of the software even under the limited software execution environment.

BRIEF DESCRIPTION OF THE DRAWING

FIG. 1 is a diagram illustrating a structure of a conventional compiler;
FIG. 2 is a diagram for explaining a delay of a time-sequential process;
FIG. 3 is a diagram for explaining avoiding of the delay of the time-sequential process;
FIG. 4 is a diagram illustrating an image of a conventional dynamic scheduler;
FIG. 5 is a diagram illustrating a structure of a compiler in an embodiment of the present invention;
FIG. 6 is a diagram for explaining a classification of source codes forming the software;
FIG. 7 is a diagram illustrating an example of a dependency graph representing a dependency relationship of a statement;
FIG. 8 is a diagram illustrating an example of a replacement of a processing sequence based on a dependency graph;
FIG. 9 is a diagram illustrating an example of a structure of software flow;
FIG. 10 is a flow chart illustrating a process in a first stage of the embodiment;
FIG. 11 is a diagram for explaining redefining of process blocks of an unconditional jump and a loop process as a substitution computation process block;
FIG. 12 is a diagram for explaining redefining substitution computation process blocks;
FIG. 13 is a diagram for explaining redefining a thread process block and a scheduler process block;
FIG. 14 is a diagram for explaining the thread process block and the scheduler process block;
FIG. 15 is a flow chart illustrating a process in a second stage of the embodiment;
FIG. 16 is a diagram for explaining a method of adding a statement to the thread process block;
FIG. 17 is a diagram for explaining a method of adding a statement to the scheduler process block;
FIG. 18 is a diagram for explaining a timer process of an outermost scheduler process block;
FIG. 19 is a flow chart for explaining a process in a third stage of the embodiment;
FIG. 20 is a diagram illustrating an image of a timing chart during operation of the embodiment;
FIG. 21 is a diagram comparing the image of the timing chart of the embodiment with that of the conventional technique illustrated in FIG. 2;
FIG. 22 is a diagram illustrating an image of the scheduler process block of the embodiment; and
FIG. 23 is a diagram illustrating measured results of resource utilization efficiency for a case where an actual program is compiled, with respect to both the conventional technique and the embodiment.

DESCRIPTION OF THE REFERENCE NUMERALS

| 31 | Source Code |
| 32 | Front End |
| 33-1,33-2 | Intermediate Language |
| 34 | Middle Path |
| 35 | Back End |
| 36 | Execution Code |
| 81 | Task or Thread |
| 83 | Dynamic Scheduler |
| 84 | Context Switch and Process Managing Function |
| 86 | OS |
| 88 | Timer Function |

<u>BEST MODE OF CARRYING OUT THE INVENTION</u>

In a compiling method and a compiler according to one aspect of the present invention, a restructuring is performed to form a source code of software described in time sequence, from among software operating on an embedded equipment, into tasks or threads by a preprocessing in an intermediate language at the time of compiling and to generate a scheduling code. As a result, it is possible to generate an execution code that can achieve a small overhead and improve the utilization efficiency of resources such as a CPU.

In other words, in an application having a loop structure that performs a time-sequential process such as a dynamic image processing a communication process, from among applications operating in the embedded equipment, the restructuring is performed in order to improve the utilization efficiency of the resources including the CPU by a mechanism which performs the necessary computing process at a timing required at the time of execution and releases the CPU when the computing process is unnecessary. The restructuring includes structuring a scheduler formed by a process block of a conditional branch from a process block that is classified at a statement level in an intermediate language (or intermediate code) which has been subjected to a structure analysis in an initial stage of the compiling, forming a timer handler, extracting a process block of a substitution computation process executed after the conditional branch, forming a thread, releasing the CPU by waiting, and inserting a wake-up mechanism responsive to a signal.

Therefore, according to one aspect of the present invention, the source code which becomes a source of an execution target software is analyzed and classified at the intermediate language level in the compiling process, and is redefined from the extracted process block as a process block that is executable in parallel (or simultaneously) and a process block related to the scheduling, so as to insert a minimum required statement. Thus, it is possible to delete an unnecessary external statement (or code), and to realize a dedicated scheduler for the target software by the restructuring.

<u>EMBODIMENTS</u>

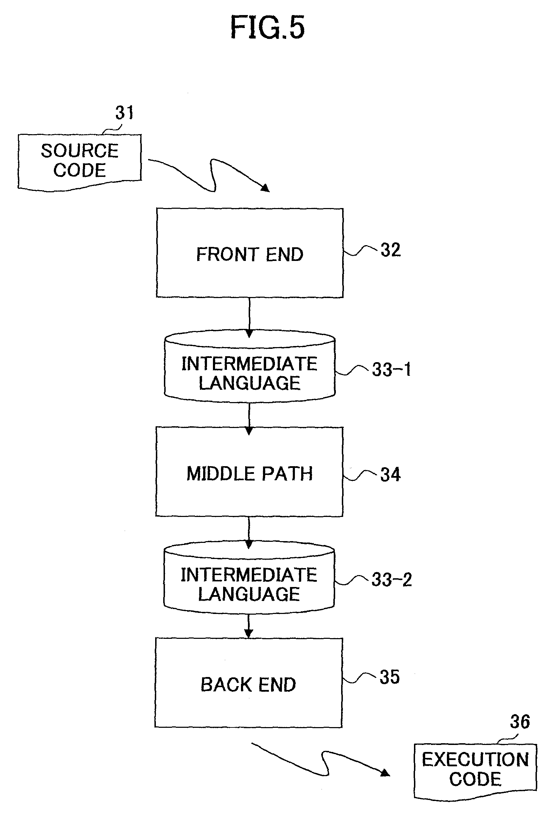

FIG. 5 is a diagram illustrating a structure of a compiler in an embodiment of the present invention. The compiler of this embodiment employs a compiling method in an embodiment of the present invention. In this embodiment, the present invention is applied to a case where an execution code of software in an embedded equipment is to be generated. The embedded equipment includes a processor, such as a CPU, and a storage unit, such as a memory. In other words, the embedded equipment is formed by a computer (or computer system) having a known hardware structure in which the processor executes a program stored in the storage unit.

In order to efficiently execute the software of the embedded equipment as a single application, the compiler illustrated in FIG. 5 optimizes the execution code. The compiler illustrated in FIG. 5 includes an interpreting device (front end) 32, an optimizing device (middle path) 34, and a code generating device (back end) 35. The front end 32 generates an intermediate language 33-1 from a source code 31 and stores the intermediate language 33-1 in the storage unit. The middle path 34 generates an intermediate language 33-2 from the intermediate language 33-1 and stores the intermediate language 33-2 in the storage unit. The back end 35 generates an optimized execution code 36 from the intermediate language 33-2 stored in the storage unit, and stores the optimized execution code 36 in the storage unit if necessary. During the interpreting process of the compiling, the middle path 34 performs a simple restructuring such as deletion of unnecessary variables, packing of instructions, and inline expansion of a call function. The front end 32 and the back end 35 are simple interpreting devices, and will not actively optimize the execution code. When not optimizing the execution code, the middle path 34 is not used because the intermediate language 33-1 generated by the front end 32 is directly decoded by the back end 35 to generate the execution code.

Generally, the compiling process translates the processing sequence indicated by the source code into the execution code that can be decoded by the processor (or computing unit) such as the CPU. In addition, the middle path generates an execution code that is more efficient by the general-purpose optimizing technique such as deletion of mathematical expression statements and variables that are not propagated, inline expansion of subroutines, and unrolling that expands a loop in units of iterations.

On the other hand, this embodiment employs a technique that generates an efficient execution code that is embedded in the middle path 34. The middle path 34 illustrated in FIG. 5 receives the intermediate language 33-1 as an input, and performs a restructuring according to the following procedure to generate the intermediate language 33-2. The restructuring is performed at the level of the intermediate language 33-1. For this reason, the front end 32 and the back end 35 may be similar to those used in the conventional compiler, and it is unnecessary to modify the front end and the back end that are conventionally used. The middle path 34 may be embedded for general-purpose in an existing compiler.

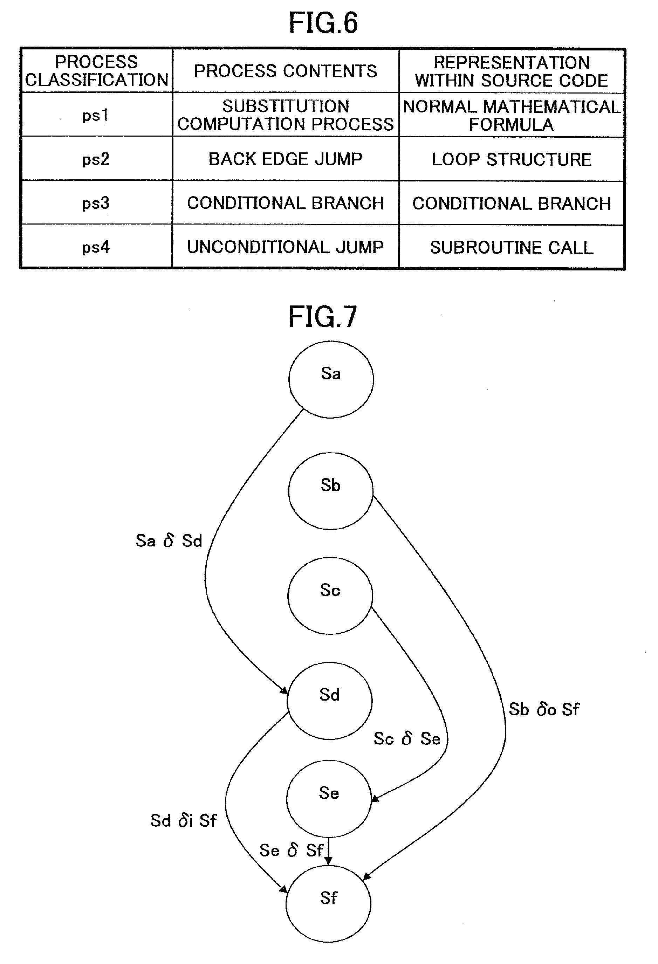

FIG. 6 is a diagram for explaining classifications of the source code 31 forming the software. FIG. 6 illustrates a case where the source code 31 forming the software is classified at the statement level, and all source codes 31 after being interpreted into the intermediate language 33-1 may be classified into one of the following process classifications ps1 through ps4. The process classification ps1 indicates a substitution computation process that substitutes a computation result in the storage unit such as a memory and a register. The process classification ps2 indicates a loop process indicated by a jump instruction including a back edge, that is, a back edge jump. The process classification ps3 indicates a branch process indicated by a conditional branch or a conditional jump. The process classification ps4 indicates a subroutine, a function call or the like, that is, an unconditional jump instruction.

In this embodiment, the restructuring is performed by focusing on the intermediate language 33-1 having an arbitrary structure. Accordingly, the general-purpose optimization process may be performed at an arbitrary location. However, in order to use the loop structure as it is, it is assumed that the loop optimization technique such as unrolling is not applied before the restructuring.

The compiler always has an internal variable table that is used for generating the intermediate language 33-2. Each statement of the intermediate language 33-2 is numbered in an ascending order, and includes variables (right term of formula) that are referred and variables (left term of formula) that are defined. When an xth statement is denoted by Sx, an aggregate of the referring variables of the statement Sx can be represented by a (Formula 1), and an aggregate of the defining variables of the statement Sx can be represented by a (Formula 2).

$$\mathrm{Use(Sx)} \qquad\qquad \text{(Formula 1)}$$

$$\mathrm{Def(Sx)} \qquad\qquad \text{(Formula 2)}$$

The (Formula 1) and the (Formula 2) are also applied to a statement group SG which has been grouped, and a (Formula 3) and a (Formula 4) can be defined in a similar manner with respect to a yth statement group SGy.

$$\mathrm{Use(SGx)} \qquad\qquad \text{(Formula 3)}$$

$$\mathrm{Def(SGx)} \qquad\qquad \text{(Formula 4)}$$

A void set $\Phi$ is used to represent a case where the defining and referring variables do not exist.

In a case where the statement Sx is a conditional branch statement, only the referring variables for judging the condition exist, and thus, a (Formula 5) stands.

$$\mathrm{Def(Sx)} = \Phi, \ \mathrm{Use(Sx)} \neq \Phi \qquad \text{(Formula 5)}$$

In a case where the statement Sx is an unconditional jump statement of a subroutine call, a (Formula 6) stands.

$$\mathrm{Def(Sx)} = \mathrm{Use(Sy)} = \Phi \qquad\qquad \text{(Formula 6)}$$

The dependency relationship among the statements is defined depending on whether or not the set of the defining variables and the set of the referring variables include identical elements. A positive direction dependency exists in a case where a (formula 7) stands for the aggregates of the variables derived from the (Formula 1) and the (Formula 2), with respect to mth and nth statements Sm and Sn having a relationship m < n.

$$\mathrm{Def(Sm)} \cap \mathrm{Use(Sn)} \neq \Phi \qquad\qquad \text{(Formula 7)}$$

A (Formula 8) is defined as a formula representing a positive direction dependency 5 of the statements Sm and Sn.

$$\mathrm{Sm} \ \delta \ \mathrm{Sn} \qquad\qquad \text{(Formula 8)}$$

In a case where the (Formula 7) stands for the relationship m > n, a (Formula 9) is defined as a formula representing a negative direction dependency $\delta i$ of the statements Sm and Sn.

$$Sm \ \delta i \ Sn \qquad\qquad\qquad \text{(Formula 9)}$$

In addition, an output dependency exists in a case where a (Formula 10) stands.

$$Def(Sm) \ = \ Def(Sn) \qquad\qquad \text{(Formula 10)}$$

A (Formula 11) is defined as a formula representing an output dependency $\delta o$ of the statements Sm and Sn

$$Sm \ \delta o \ Sn \qquad\qquad\qquad \text{(Formula 11)}$$

In a case where a (Formula 12) stands with respect to an arbitrary k satisfying a relationship m < k < n for the statements Sm and Sn that satisfy the (formula 11), the variables defined by the statement Sm are not referred anywhere and can be overwritten in the statement Sn. Hence, the statement Sm can be deleted in this case.

$$(Def(Sm)) \ = \ Def(Sn)) \ \cap \ Use(Sk) \ = \ \Phi \quad \text{(Formula 12)}$$

The (Formula 8), (Formula 9) and (Formula 11) are referred to in general as dependency equations. By deriving the (Formula 1) and the (Formula 2) with respect to all statements, it is possible to create a dependency graph representing the dependency relationship of each of the statements.

FIG. 7 is a diagram illustrating an example of the dependency graph representing the dependency relationship of the statements. In FIG. 7, Sa through Sf denote statements. In the example illustrated in FIG. 7, the statement Sd refers to a definition result of the statement Sa, and variables referred to by the statement Sd are defined by the statement Sf. In addition, defining variables of the statement Sb are not used anywhere, and are redefined by the statement Sf. Hence, it may be regarded that the (Formula 12) stands, and the statement Sb is deleted from the codes.

As a rule, the statements satisfying the relationship of the (Formula 8), the (Formula 9) and the (Formula 11) have some kind of a dependency relationship, and the processing sequence thereof cannot be interchanged. In other words, the processing sequence of the statements which do not satisfy the relationship of the (Formula 8), the (Formula 9) and the (Formula 11) can be interchanged.

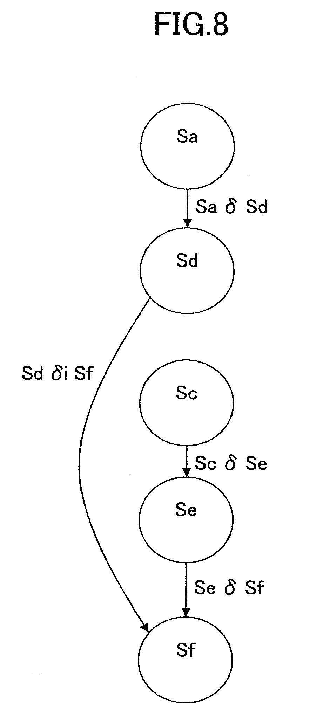

From the point of view described above, when a group formed by the statement Sa and the statement Sd is denoted by SGx, and a group formed by the statement Sc and the statement Se is denoted by SGy in FIG. 7 as represented by a (Formula 13), the groups SGx and SGy are not in a dependency relationship as may be seen from a (Formula 14), and the processing sequence thereof cannot be interchanged. In the (Formula 14), "$\neg\delta$" indicates that there is no dependency relationship. In addition, because the statement Sb can be deleted as described above, the dependency graph illustrated in FIG. 7 becomes equivalent to a graph illustrated in FIG. 8. FIG. 8 is a diagram illustrating an example in which the processing sequence of the statements is interchanged, that is, sorted, based on the dependency graph of FIG. 7.

$$SGx \ = \ (Sa, \ Sd), \ SGy \ = \ (Sc, \ Se) \qquad \text{(Formula 13)}$$

In other words, because the following relationship

$$Def(SGx) \ = \ Def(Sa) \ U \ Def(Sd), \ Use(SGx) \ =$$
$$Use(Sa) \ U \ Use(Sd)$$
$$Def(SGy) \ = \ Def(Sc) \ U \ Def(Se), \ Use(SGy) \ =$$

```
Use(Sc) U (Use(Se)
and
      (Def(Sa) or Def(Sd) ∩ (Use(Se) or Use(Se)) = Φ
      (Use(Sa) or Use(Sd) ∩ (Def(Se) or Def(Se)) = Φ
      (Def(Sa) or Def(Sd) ∩ (Def(Se) or Def(Se)) = Φ
stand, the (Formula (14) can be obtained.
      SGx ¬δ SGy                          (Formula 14)
```

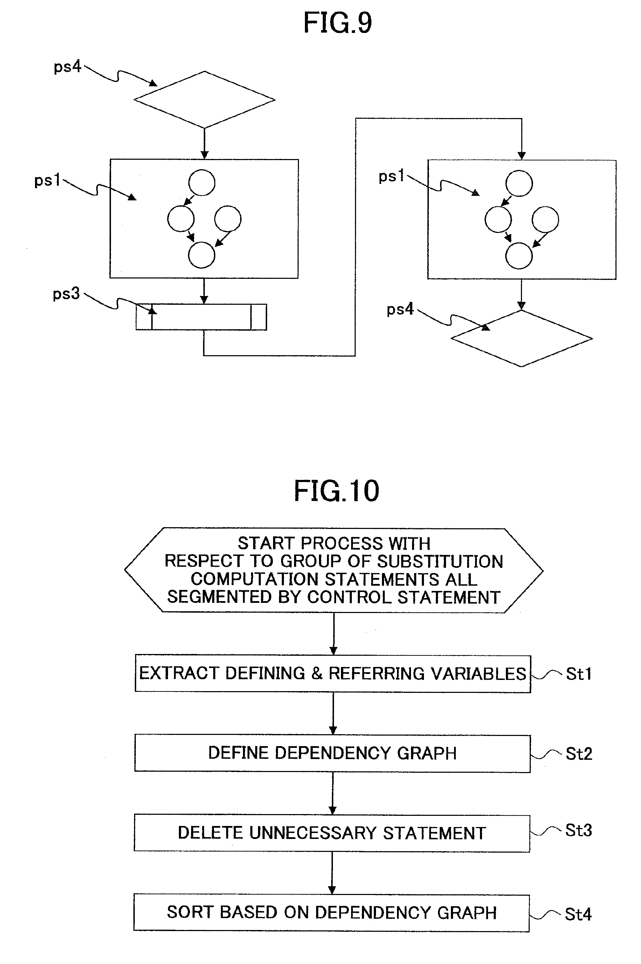

FIG. 9 is a diagram illustrating an example of a structure of software flow. In FIG. 9, ps1 through ps4 respectively denote process blocks corresponding to the processes having the process classifications ps1 through ps4 illustrated in FIG. 6. A sequence of the statements expanded in the intermediate language has a format illustrated in FIG. 9 in which the conditional branch process block ps3 of the unconditional jump process block ps4 is inserted between a plurality of substitution computation process block ps1. The conditional branch process block ps3 and the unconditional jump process block ps4 indicate the control structure and not the data dependency, and it may be regarded that the process flow is temporarily discontinued. Hence, the units of processing of the middle path 34 illustrated in FIG. 5 may be regarded as a set of the substitution computation process blocks ps1 that are segmented by the statements of the conditional branch process block ps3 and the unconditional jump process block ps4, that is, a set of substitution statements.

In this embodiment, it is assumed for the sake of convenience that the process of a first stage rearranges the substitution computation process blocks ps1 illustrated in FIG. 9 based on the dependency equation among the statements. FIG. 10 is a flow chart illustrating the first stage of this embodiment. In FIG. 10, an input is the intermediate language 33-1, and an output is also the intermediate language 33-1.

The first stage illustrated in FIG. 10 is performed with respect to a group of substitution computation statements all segmented by the control statement. First, a step St1 extracts the defining and referring variables, and a step St2 defines the dependency graph. In addition, a step St3 deletes the unnecessary statements, and a step St4 sorts the statements based on the dependency graph.

In the dependency analysis of the first stage, there conventionally were cases where the dependency relationship of pointer variables or the like cannot be clearly extracted in the compiling stage. However, the first stage of this embodiment is a preprocessing for simplifying the operation of the second and subsequent stages, and it is not essential that all dependency relationships can be extracted.

In a second stage of this embodiment, the combining (or joining) and redefinition of the groups of statements are performed according to a system which will be described later, with respect to the statement sequence that is reduced at the intermediate language level. In addition, the second stage of this embodiment performs an operation of combining (or joining) the process blocks that are classified according to the process classifications described above, but the general software has a hierarchical structure such as a nest loop, a conditional branch having a nest structure, a loop under a subroutine, a conditional branch and the like. For this reason, it is assumed for the sake of convenience that the second stage of this embodiment performs the operation from the innermost hierarchical level (or lowest hierarchical layer) of the nest or nest structure.

The process block at the innermost hierarchical level of the nest or nest structure is always the process block of the substitution computation process. In a case where the statement existing in the innermost hierarchical level is deleted by the solution of the dependency equation in the first stage, the corresponding nest structure is also deleted.

When processing the process block in the innermost hierarchical level of the nest or nest structure, if the process block of the call source is an unconditional jump, that is, the body of the called subroutine, the process block is combined (or joined) with the process block of the unconditional jump having the process classification of the previous stage, in order to regroup and redefine the combination as a substitution computation process block.

In a general code optimization, if the statement is inline expanded, the code optimization is performed in the process of the first stage together with the reduction of the normal substitution computation process. On the other hand, this embodiment does not require the inline expansion of the statement, and it is sufficient to simply group the statements.

When processing the process block in the innermost hierarchical level of the nest or nest structure, if the process block of the call source is a process block of a loop process (or back edge jump), that is, the body of a simple loop that does not involve a control structure such as a conditional branch within the loop, the process block is regrouped and redefined as a substitution computation process block.

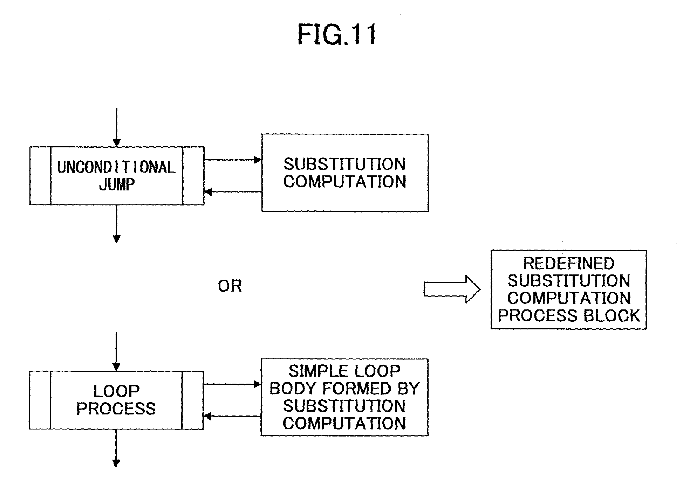

FIG. 11 is a diagram for explaining redefining of process blocks of an unconditional jump and loop process (or back edge jump) as a substitution computation process block. As illustrated in FIG. 11, in a case where the process block of the call source is the process block of the unconditional jump, the process block is combined with the process block of the unconditional jump having the process classification of the previous stage, in order to regroup and redefine the combination as a substitution computation process block. Further, as illustrated in FIG. 11, in a case where the process block of the call source is a process block of a loop process (or back edge jump), the process block is regrouped and redefined as a substitution computation process block.

As a result of redefining the substitution computation process block, the substitution computation process blocks may be arranged vertically in the same level as the nest or nest structure. In this case, the vertically arranged substitution computation process blocks are combined and redefined again as a substitution computation process block.

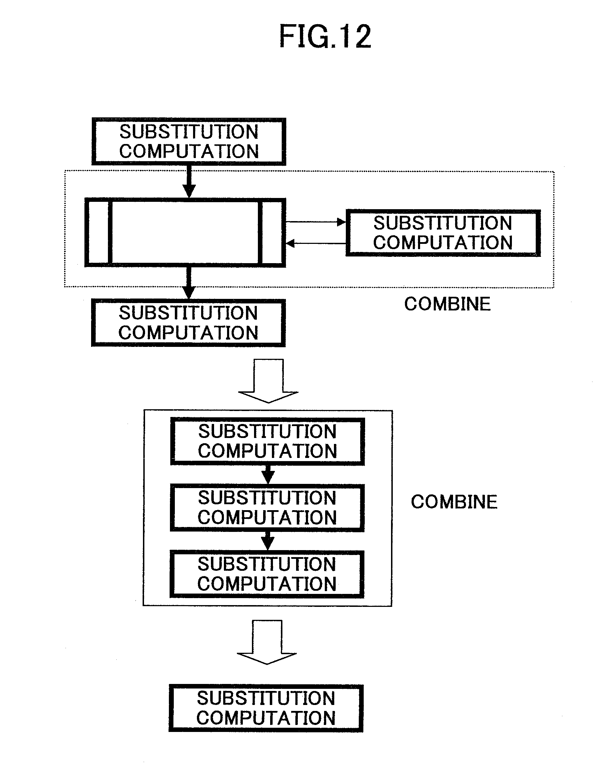

FIG. 12 is a diagram for explaining redefining the substitution computation process blocks. In FIG. 12, "Substitution Computation" represents a substitution computation process block and process blocks surrounded by dotted lines represent combined process blocks.

Next, in a case where the process block of the call source is a conditional branch process, that is, a dependent clause of one of true and false of the conditional branch, no particular combining process is performed to combine the process blocks, and the process block is redefined as a thread (or threading) process block.

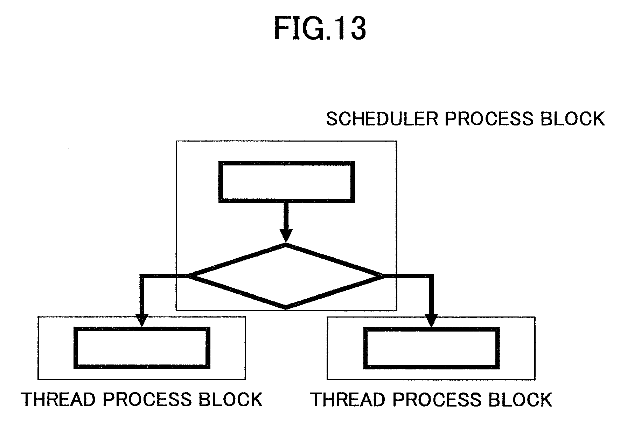

FIG. 13 is a diagram for explaining redefining the thread process block and a scheduler process block. When the nest or nest structure is hierarchically analyzed, a constituent element of the thread process block may not necessarily be a single process block, and in addition, the constituent element of the thread process block may not necessarily be only the substitution computation process block.

Furthermore, in a case where a process block following a certain block is a process block of a conditional branch process, the two process blocks are combined and redefined as a scheduler process block.

There is a close relationship between the thread process block and the scheduler process block. Because the thread process block is a dependent clause from the conditional branch, the thread process block links to a scheduler process block that includes a corresponding conditional branch.

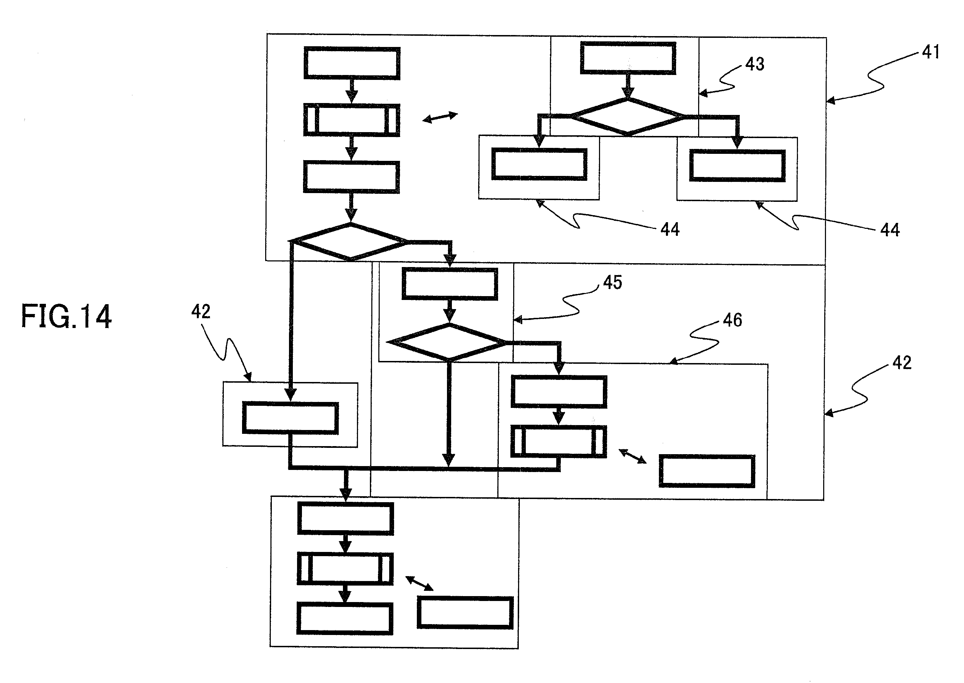

The thread process block and the scheduler process block are redefined with respect to the code which is the target to be formed into the process block, by also taking into consideration the nest or nest structure. FIG. 14 is a diagram for explaining the thread process block and the scheduler process block. In a program illustrated in FIG. 14, 41 denotes a scheduler process block belonging to an uppermost (or highest) level of the hierarchical structure in FIG. 14, 42 denotes a thread process block depending on the scheduler process block 41, 43 denotes a scheduler process block belonging to a level that is one level lower than that of the scheduler process block 41, 44 denotes a thread process block depending on the scheduler process block 43, 45 denotes a scheduler process block belonging to a level that is one level lower than that of the thread process block 42, and 46 denotes a thread process block belonging to the scheduler process block 45.

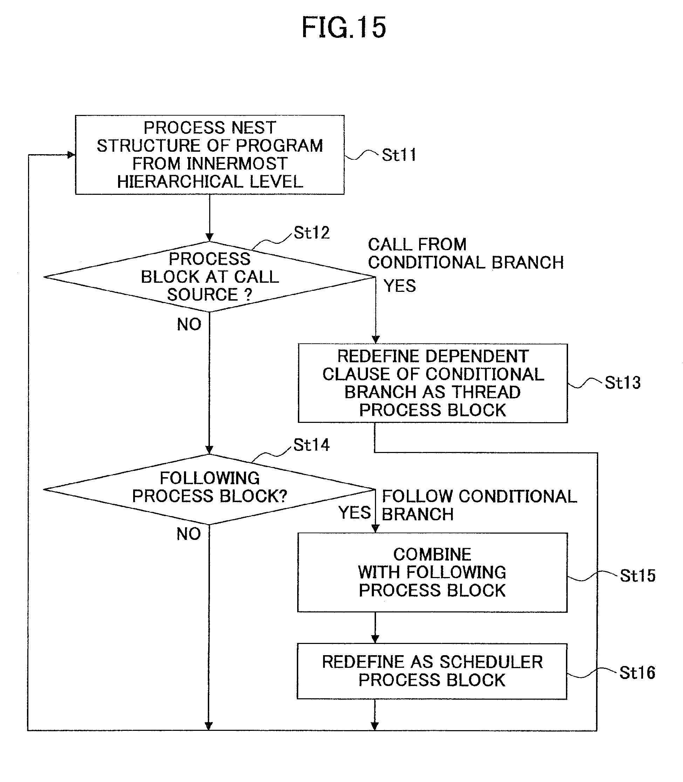

FIG. 15 is a flow chart illustrating a process in the second stage of this embodiment. In FIG. 15, an input is the intermediate language 33-1, and an output is also the intermediate language 33-1.

The second stage illustrated in FIG. 15 is performed with respect to the results of sorting the statements based on the dependency graph in the first stage described above. First, a step St11 starts the process in a sequence starting from the process block in the innermost hierarchical level of the nest or nest structure, with respect to the program code which is the target to be formed into the process block. A step St12 decides whether or not the process block of the call source is a conditional branch process. If the decision result in the step St12 is YES, a step St13 redefines a dependent clause of the conditional branch as a thread process block, and the process returns to the step St11 in order to start the process from the process block in a level next to the innermost hierarchical level of the nest or nest structure. On the other hand, if the decision result in the step St12 is NO, a step St14 decides whether or not the following process block follows the conditional branch process to continue thereto. If the decision result in the step St14 is NO, the process returns to the step St11 in order to start the process from the process block in a level further next to the innermost hierarchical level of the nest or nest structure. If the following process block is the conditional branch process and the decision result in the step St14 is YES, a step St15 combines the process block and the following process block to redefine a scheduler process block. After the step St15, the process returns to the step St11, the process returns to the step St11 in order to start the process from the process block in a level next to the innermost hierarchical level of the nest or nest structure.

In the second stage of this embodiment, the combining (or joining) and redefinition of the groups of statements are performed according to the system which will be described later, with respect to the statement sequence that is reduced the intermediate language level. In addition, the second stage of this embodiment performs the operation of combining (or joining) the process blocks that are classified according to the process classifications described above, but the general software has a hierarchical structure such as a nest loop, a conditional branch having a nest structure, a loop under a subroutine, a conditional branch and the like. For this reason, it is assumed for the sake of convenience that the second stage of this embodiment performs the operation from the innermost hierarchical level of the nest or nest structure as described above.

In a third stage of this embodiment, a control statement is added to the scheduler process block and the thread process block which are grouped in the second stage described above, in order to generate a final intermediate language (or intermediate code) as a thread and scheduler.

The conditional branch and the computation that computes the conditional branch, and the call of the process block depending therefrom have a relationship that is equivalent to that between a dynamic scheduler and a thread that is scheduled. This embodiment employs a structure that does not use an external (or externally coupled) scheduler, and instead provides in the structure of the scheduler process block a mechanism which functions similarly to a context switch function of the thread. In addition, a mechanism is provided in the thread process block to operate only when requested from the scheduler.

Therefore, in the third stage of this embodiment, the following operation is performed with respect to the scheduler process block and the thread process block which follows the scheduler process block.

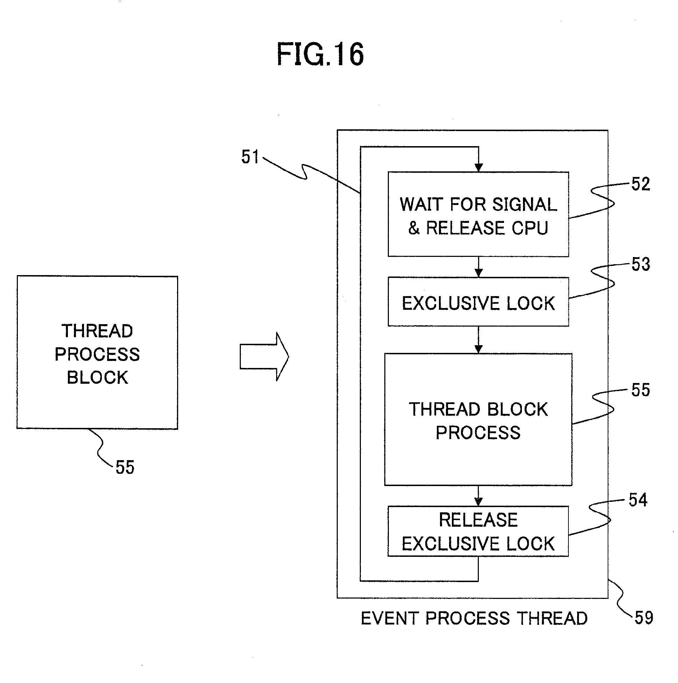

FIG. 16 is a diagram for explaining a method of adding a statement to the thread process block. First, the thread process block 55 is surrounded by a loop as indicated by 51 in FIG. 16, and a signal reception is waited at an input part (or leading part) of the loop as indicated by 52. Until the signal reception is made, a service call of the OS, such as a wait mechanism that releases the CPU, is inserted. In addition, as indicated by 53 and 54, by taking into consideration a case where the thread process blocks operate in parallel, the process blocks that are executed in parallel (or executed simultaneously) are analyzed based on the dependency equation derived from the (Formula 8), the (Formula 9) and the (Formula 11), and an exclusive control code of Semaphore or Mutex is inserted when the dependency relationship exists. In other words, an exclusive lock is performed as indicated by 53, and an exclusive lock is released as indicated by 54. By the above described operation, it is possible to add to the body of the program a code which defines and starts the thread process block 55 having the modified structure as an event process thread 59.

By performing the operation described above, the event process thread 59 releases the CPU at a timing when no processing needs to be performed, and it is possible to prevent the CPU resources from being utilized unnecessarily.

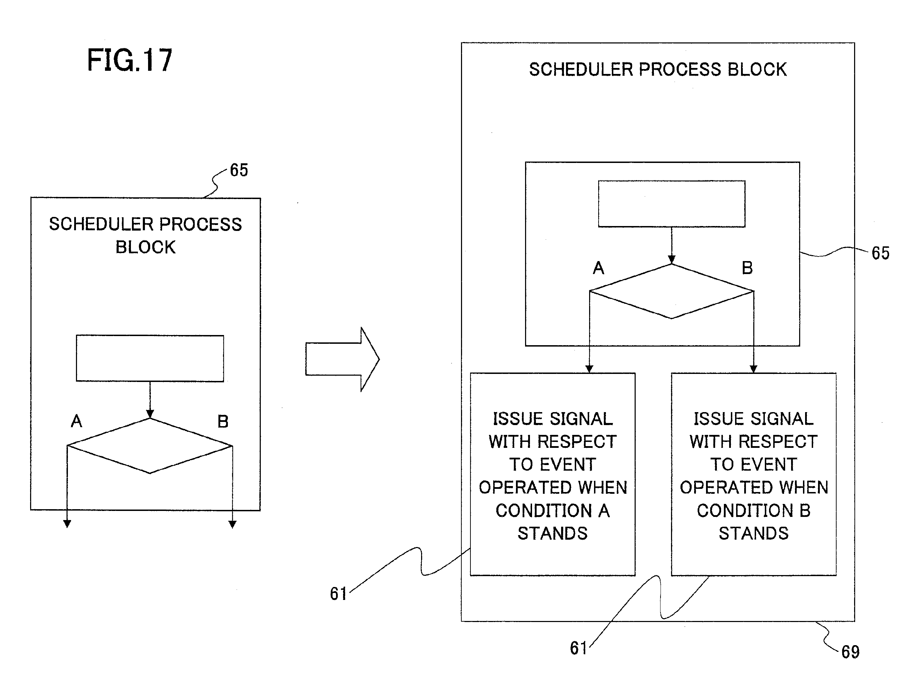

FIG. 17 is a diagram for explaining the method of adding a statement to the scheduler process block. The scheduler process block includes a conditional branch process, and the timing when the conditional branch occurs may be regarded as the timing when the event process thread 59 is started (or scheduled). Hence, a statement (or code) that issues a signal (that is, a signal with respect to an event that is operated when a condition A or B stands) expected by the dependent event process thread 59 is inserted as indicated by 61 in FIG. 17, in order to define a scheduler process block 69.

In a case where the scheduler process block 65 exists within the nest structure within the source code 31 which becomes the source, the scheduler process block 65 is started by a scheduler process block which is in a parent hierarchical level. In the example illustrated in FIG. 14, by the restructuring that inserts the wake-up mechanism responding to the signal, the scheduler process block 45 in the inner hierarchical level is dynamically started at a timing when the signal is transmitted from the scheduler process block in the uppermost hierarchical level indicated by 41.

In this embodiment, it is assumed that the program is described in a general-purpose programming language that mainly outputs an intermediate computation result of a time-sequential process at a predetermined timing. In general, such a program has a loop structure in the uppermost hierarchical level of the program. By performing the process of the second stage of this embodiment, a scheduler process block surrounded by an outermost loop, that is, an outermost scheduler process block, exists.

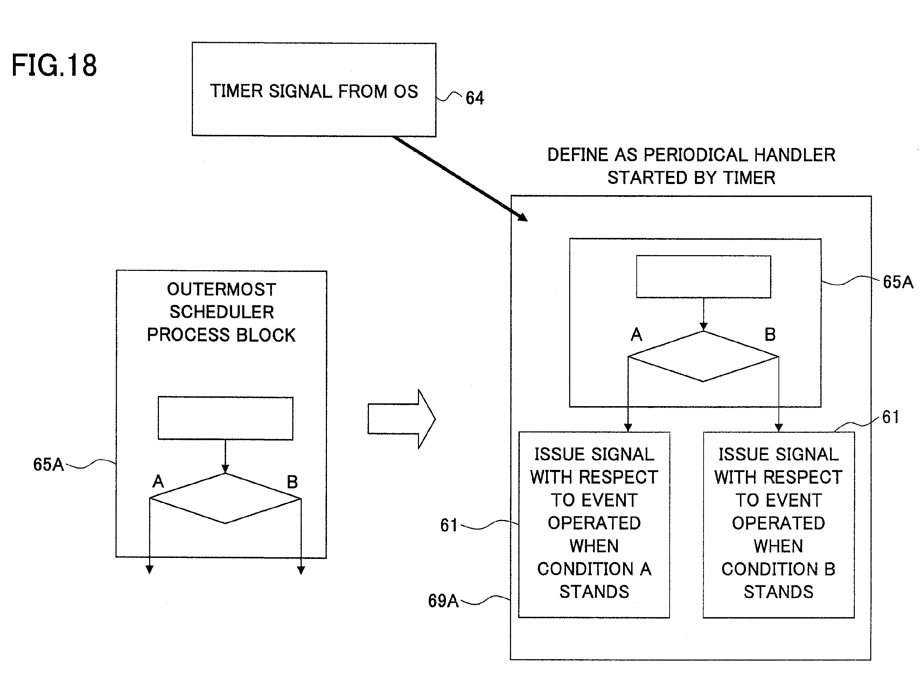

There is no dynamic signal generating device that starts the outermost scheduler process block. Hence, a timer function of the OS is used for the outermost scheduler process block as illustrated in FIG. 18, in order to embed a mechanism similar to a timer handler that periodically transmits a signal (or timer signal) from the OS and automatically starts the outermost scheduler process block. FIG. 18 is a diagram for explaining a timer process of the outermost scheduler process block. In FIG. 18, those parts that are the same as those corresponding parts in FIG. 17 are designated by the same reference numerals, and a description thereof will be omitted. In FIG. 18, 64 denotes a signal (or timer signal) periodically transmitted from the OS, 65A denotes an outermost scheduler process block, and 69A denotes a scheduler process block that is defined by being inserted with a statement (or code) that issues a signal (that is, signal with respect to an event that is operated when a condition A or B stands) expected by the dependent event process thread 59 as indicated by 61.

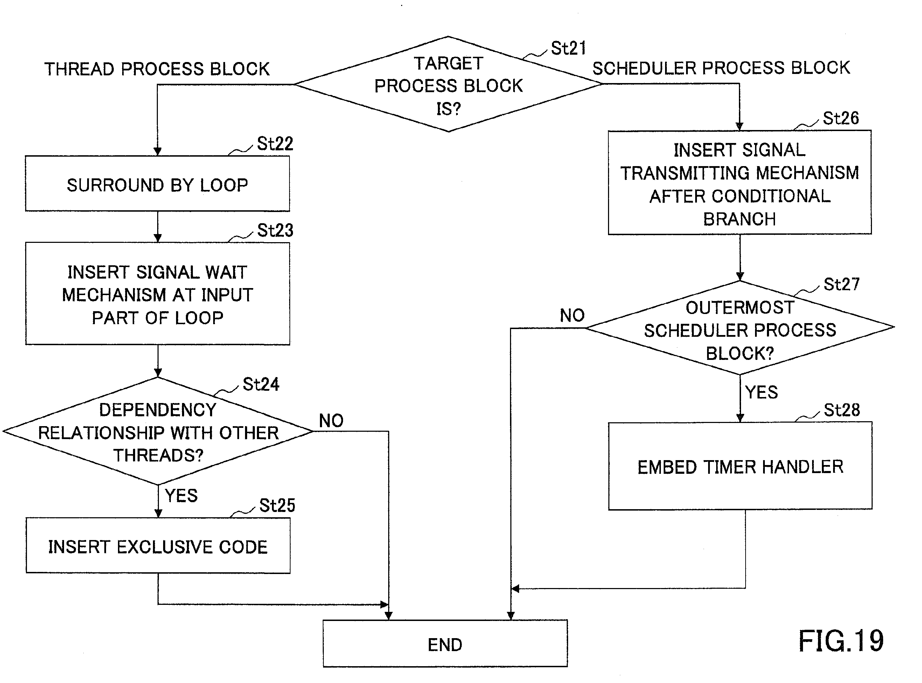

FIG. 19 is a flow chart for explaining a process in the third stage of this embodiment. In FIG. 19, an input is the intermediate language 33-1, and an output is also the intermediate language 33-1.

The third stage illustrated in FIG. 19 is performed with respect to the scheduler process block and the thread process block that are grouped in the second stage described above. First, a step St21 decides whether the process block that is the processing target is the thread process block or the scheduler process block. If the processing target is the thread process block, a process of adding a statement to the thread process block is performed by steps St22 through St25. On the other hand, if the processing target is the scheduler process block, a process of adding a statement to the scheduler process block is performed by steps St26 through St28.

The step St22 surrounds the thread process block 55 by a loop as indicated by 51 in FIG. 16. The step St23 waits for a signal reception to the input part of the loop as indicated by 52 in FIG. 16, and inserts a service call of the OS, such as a wait mechanism that releases the CPU until the signal reception is made. By taking into consideration a case where the thread process blocks operate in parallel, the step St24 analyzes the process blocks that are executed in parallel (or executed simultaneously) based on the dependency equation derived from the (Formula 8), the (Formula 9) and the (Formula 11), as indicated by 53 and 54 in FIG. 16, in order to judge whether or not the process blocks are in the dependency relationship. If the decision result in the step St24 is YES, the step St25 inserts an exclusive control code of Semaphore or Mutex, and the process ends. On the other hand, if the decision result in the step St24 is NO, the process ends.

The step St26 inserts a transmitting mechanism (statement) that issues a signal (that is, a signal with respect to an event that is operated when a condition A or B stands) expected by the dependent event process thread 59, to the dependent clause after the conditional branch as indicated by 61 in FIG. 17, in order to define the scheduler process block 69. The step St27 decides whether the scheduler process block is the outermost scheduler process block. If the decision result in the step St27 is YES, the step St28 embeds the timer handler, and the process ends. On the other hand, if the decision result in the step St27 is NO, the process ends.

By performing the operation of the third stage described above, it is possible to derive the dynamic scheduler function from the processing sequence included within the source code 31, and an overhead such as that generated when an external scheduler is used will not be generated. In addition, because there is no need to perform unnecessary buffering, the memory utilization efficiency is improved. In addition, the resources of the CPU can be used efficiently because each process block is also embedded with a mechanism that uses the CPU when necessary, that is, a mechanism that releases the CPU when the computing process is unnecessary.

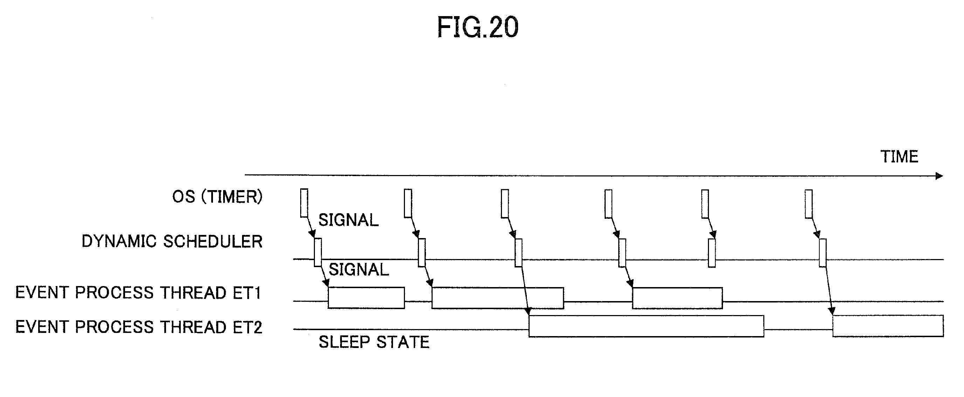

FIG. 20 is a diagram illustrating an image of a timing chart during operation of this embodiment. FIG. 20 illustrates the timings of a periodic signal (timer signal) that is obtained by use of the timer function of the OS, a dynamic scheduler that is realized by the scheduler process block, and event process threads ET1 and ET2.

If one of the codes having the nest or nest structure has a scheduler existing in the same hierarchical level and the sequence of the statements (or process blocks) derived from the (Formula 14) can be interchanged, the processing sequence of the scheduler process block can be interchanged to introduce the concept of priority assignment control in the dynamic scheduling. Generally, the priority assignment of the dynamic scheduler is determined according to a heuristic algorithm, and the amount of CPU used (or critical path of the process block), the amount of memory used (or amount of data used) and the like are used as parameters (or coefficients) used by the judgement of the algorithm. When determining the parameter which is used as a key when sorting the priorities, obtaining the optimum solution depends largely on the properties of the target software.

In this embodiment, the processes of the first through third stages are embedded in the middle path 34 of the compiler. For this reason, it is possible to introduce the concept of 2-path compiling that is used as the optimization technique of the general compiler. In the general 2-path compiling, a profiling is performed by actually operating the embedded equipment or the like based on the execution code that is generated by the first compiling, and the second compiling is performed based on the results of the profiling.

When this embodiment is applied to the compiler that permits the 2-path compiling which employs the profiling, the sorting of the scheduler process blocks according to the priority may be performed based on the results of the profiling. Accordingly, the use of this technique enables a more accurate scheduling result to be obtained.

Therefore, the middle path 34 generates the intermediate language 33-2 that is decodable by the back end 35 illustrated in FIG. 5, and the compiler generates the execution code 36.

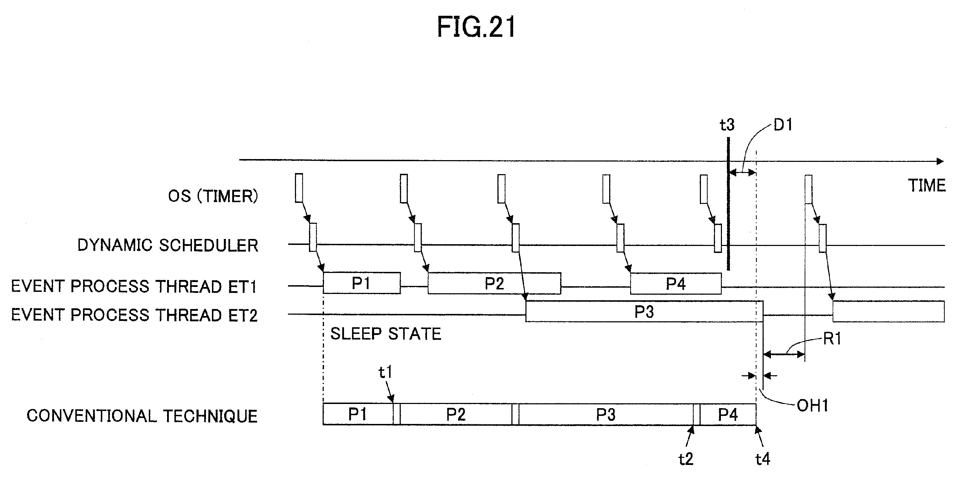

FIG. 21 is a diagram comparing the image of the timing chart of this embodiment with that of the conventional technique illustrated in FIG. 2. In FIG. 21, those parts that are the same as those corresponding parts in FIGS. 2 and 20 are designated by the same reference numerals, and a description thereof will be omitted. The upper portion of FIG. 21 illustrates the operation timing of this embodiment, and the lower portion of FIG. 21 illustrates the operation timing of the conventional technique of FIG. 2. In FIG. 21, OH1 denotes an overhead of this embodiment achieved by the use of a plurality of threads, and R1 denotes a CPU release time of this embodiment. According to this embodiment, the actual end time of the process P3 is slightly lags the end time t2 of the conventional technique, but it is possible to positively end the process P4 by the expected end time t3. For this reason, in the software that periodically outputs the intermediate computation result by performing the time-sequential process, this embodiment can avoid a delay in the process completion time that was conventionally caused by the deviation in the branch timing and was unavoidable according to the conventional technique. In addition, because this embodiment does not require a buffering as in the case of the conventional technique of FIG. 3, this embodiment can improve the memory utilization efficiency.

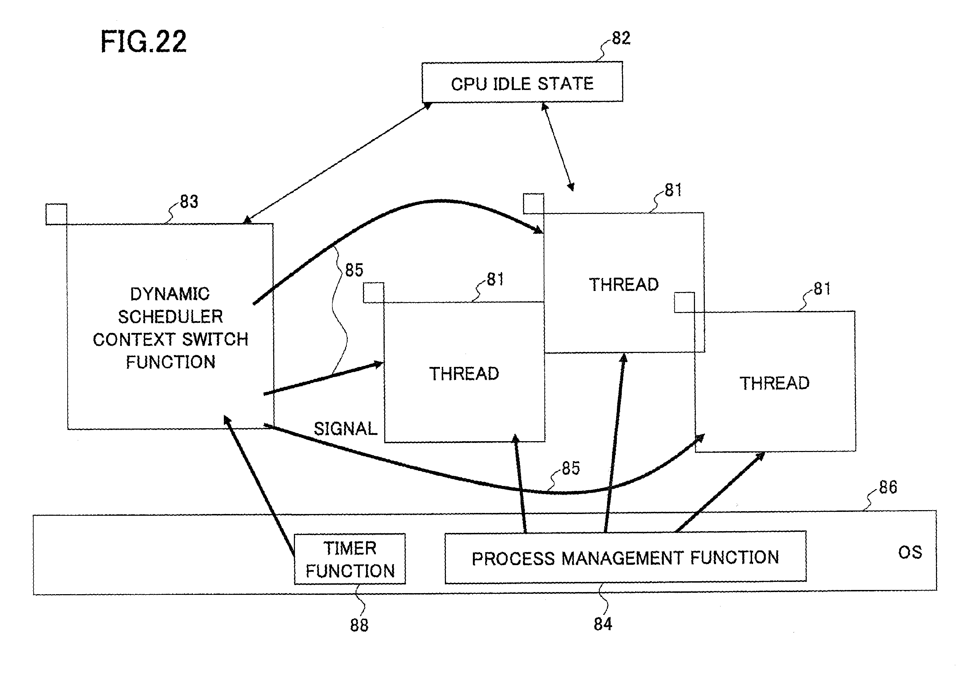

FIG. 22 is a diagram illustrating an image of the scheduler process block, that is, the dynamic scheduler of this embodiment. In FIG. 22, 81 denotes a task or thread, 82 denotes a CPU idle state, 83 denotes a dynamic scheduler that has a context switch function and performs the scheduling, 84 denotes a process management function within an OS 86, 85 denotes a switch instructed by the dynamic scheduler 83, and 88 denotes a timer function within the OS 86. When efficiently executing a plurality of tasks or threads 81 in parallel (simultaneously) in the embedded equipment, the dynamic scheduler 83 illustrated in FIG. 22 dynamically defines the priority of the tasks or threads 81 based on the signal from the timer function 88 of the OS 86, and performs the switch 85 of the tasks or threads 81 by the context switch function and the process management function 84 of the OS 86. According to this embodiment, the source code 31 that is decomposed into the threads and the timer handler actively releases the CPU and puts the CPU to the idle state 82, and thus, unnecessary CPU resources will not be used. Moreover, because the scheduler process block forming the dynamic scheduler 83 is originally the code existing in the source code 31, the overhead caused by the plurality of threads is extremely small.

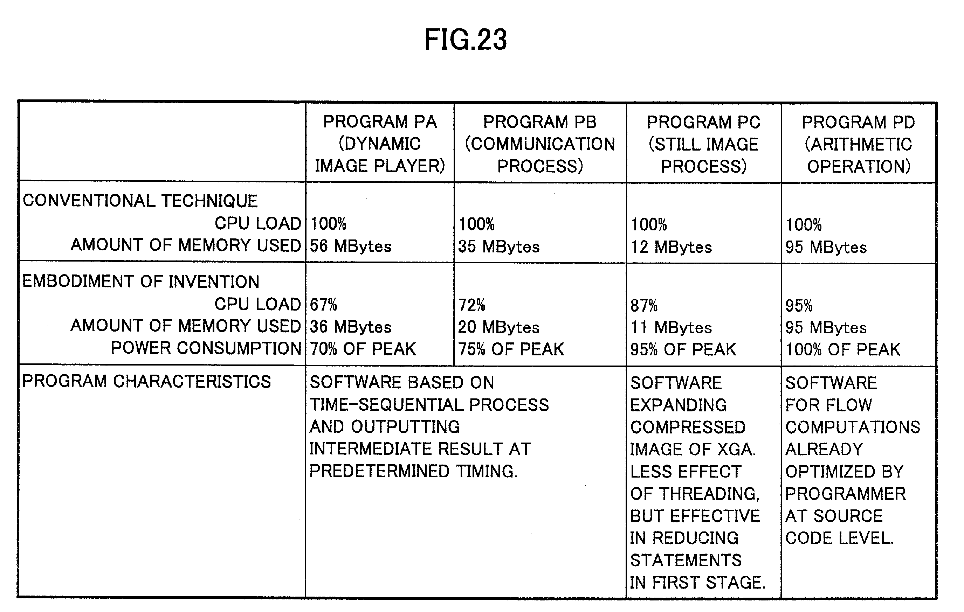

FIG. 23 is a diagram illustrating measured results of resource utilization efficiency for a case where an actual program is compiled, with respect to both the conventional technique and this embodiment. As illustrated in FIG. 23, a program PA is software of a dynamic image player, and a program PB is software of a communication process. The programs PA and PB are both software based on a time-sequential process, and output intermediate results at predetermined timings. A program PC is software of a still image process, and a program PD is software of an arithmetic operation. For example, the program PC expands compressed image of XGA, and the program PD has been optimized at the source code level by a programmer and performs flow computations.

As may be seen from FIG. 23, it was confirmed that this embodiment can reduce the CPU load for each of the programs PA through PD when compared to the conventional technique. In addition, it was confirmed that this embodiment can reduce the amount of memory used for the programs PA, PB and PC when compared to the conventional technique. Furthermore, it was confirmed that this embodiment can reduce the power consumption of the CPU for the programs PA, PB and PC when compared to the peak power consumption. With respect to the program PC, this embodiment does not display the effects of the thread or threading, but the effects of reducing the statement in the first stage were observed.

Therefore, although mainly dependent on the level of performance of the time-sequential process type program, it was confirmed that this embodiment can reduce the amount of CPU and memory used, that is, the amount of resources used, by approximately 30% when compared to that of the conventional technique. In addition, the CPU idle state can be generated as secondary effects, and it was confirmed that the power consumption of the CPU can also be reduced.

INDUSTRIAL APPLICABILITY

The present invention is applicable to various kinds of electronic equipments having resources such as a CPU and a memory, and is particularly suited for embedded equipments having limited resources.

Further, the present invention is not limited to these embodiments, but various variations and modifications may be made without departing from the scope of the present invention.

**Claims**

1. A compiling method for compiling, by a computer, software that is processed time-sequentially and outputs an intermediate result at predetermined timings, **characterized in that** there are provided:

    an extracting step extracting, by the computer, a process block related to parallel processing and conditional branch from a processing sequence included in a source code of the software; and
    a generating step automatically generating, by the computer, an execution code by restructuring the process block that is extracted.

2. The compiling method as claimed in claim 1, **characterized in that** the extracting step includes a first stage which obtains a statement sequence reduced at an intermediate language level by rearranging a process block of a substitution computation process which performs computation and substitution of a computation result in a memory and a register of the computer based on a dependency equation among statements, and a second stage which combines and redefines a group of statements with respect to the statement sequence that is reduced.

3. The compiling method as claimed in claim 2, **characterized in that:**

    the generating step includes a third stage which adds a control statement to a scheduler process block and a thread process block that are grouped in the second stage, and generates a final intermediate language as a thread and a scheduler;
    the scheduler process block is combined with a following process block and redefined if the following process block is a conditional branch process; and
    the thread process block has a dependent clause of a conditional branch that is redefined if a process block of a call source is a conditional branch process.

4. The compiling method as claimed in claim 2 or 3, **characterized in that** the first stage is performed with respect to a group of substitution computation statements all segmented by the control statement, and includes extracting variables that are defined and referred, defining a dependency graph representing a dependency relationship of each statement, deleting unnecessary statements, and sorting statements based on the dependency graph.

5. The compiling method as claimed in any of claims 2 to 4, **characterized in that** the second stage combines and redefines the group of statements in a sequence starting from a process block in an innermost hierarchical level of a nest or nest structure.

6. The compiling method as claimed in claim 5, **characterized in that** the second stage is performed with respect to a result of sorting in the first stage, and includes redefining a dependent clause of a conditional branch if a process block of a call source is a conditional branch process, and if the process block of the call source is not a conditional branch process and a following process block follows a conditional branch process the process blocks are combined as a scheduler process block and redefined, with respect to a program code which is a target to be formed into the process block.

7. The compiling method as claimed in any of claims 3 to 6, **characterized in that:**

   the third stage is performed with respect to the scheduler process block and the thread process block that are grouped in the second stage;
   a process of adding a statement to the thread process block is performed if the process block that is the target of the process is the thread process block; and
   a process of adding a statement to the scheduler process block is performed if the process block that is the target of the process is the scheduler process block.

8. The compiling method as claimed in claim 3, **characterized in that** the scheduler process block includes a context switch function of a thread, and the thread process block includes a mechanism that operates only when requested by the scheduler.

9. The compiling method as claimed in claim 3, **characterized in that** the third stage embeds a mechanism of a timer handler that automatically starts and transmits a signal periodically using a timer function of an operating system of the computer, with respect to the scheduler process block surrounded by an outermost loop.

10. The compiling method as claimed in claim 3, **characterized in that** the third stage adds a control statement having a function of releasing the computer during a time in which a computation process is unnecessary.

11. A compiler for compiling, by a computer, software that is processed time-sequentially and outputs an intermediate result at predetermined timings, **characterized in that** there are provided:

   a front end configured to interpret, by the computer, a source code of the software into a first intermediate language and to store the first intermediate language in a storage unit;
   a middle path configured to extract, by the computer, a process block related to parallel processing and conditional branch from a processing sequence included in the source code based on the first intermediate language stored in the storage unit, and to restructure the process block that is extracted and generate a second intermediate language and to store the second intermediate language in the storage unit; and
   a back end configured to automatically generate, by the computer, an execution code based on the second intermediate language stored in the storage unit.

12. The compiler as claimed in claim 11, **characterized in that** the middle path includes a first stage which obtains a statement sequence reduced at the first intermediate language level by rearranging a process block of a substitution computation process which performs computation and substitution of a computation result in the storage unit based on a dependency equation among statements, and a second stage which combines and redefines a group of statements with respect to the statement sequence that is reduced.

13. The compiler as claimed in claim 12,
   **characterized in that:**

   the middle path includes a third stage which adds a control statement to a scheduler process block and a thread process block that are grouped in the second stage, and generates the second intermediate language as a thread and a scheduler;

the scheduler process block is combined with a following process block and redefined if the following process block is a conditional branch process; and

the thread process block has a dependent clause of a conditional branch that is redefined if a process block of a call source is a conditional branch process.

**14.** The compiler as claimed in claim 12 or 13, **characterized in that** the first stage is performed with respect to a group of substitution computation statements all segmented by the control statement, and includes extracting variables that are defined and referred, defining a dependency graph representing a dependency relationship of each statement, deleting unnecessary statements, and sorting statements based on the dependency graph.

**15.** The compiler as claimed in any of claims 12 to 14, **characterized in that** the second stage combines and redefines the group of statements in a sequence starting from a process block in an innermost hierarchical level of a nest or nest structure.

**16.** The compiler as claimed in claim 15, **characterized in that** the second stage is performed with respect to a result of sorting in the first stage, and includes redefining a dependent clause of a conditional branch if a process block of a call source is a conditional branch process, and if the process block of the call source is not a conditional branch process and a following process block follows a conditional branch process the process blocks are combined as a scheduler process block and redefined, with respect to a program code which is a target to be formed into the process block.

**17.** The compiler as claimed in any of claims 13 to 16, **characterized in that:**

the third stage is performed with respect to the scheduler process block and the thread process block that are grouped in the second stage;

a process of adding a statement to the thread process block is performed if the process block that is the target of the process is the thread process block; and

a process of adding a statement to the scheduler process block is performed if the process block that is the target of the process is the scheduler process block.

**18.** The compiler as claimed in claim 13, **characterized in that** the scheduler process block includes a context switch function of a thread, and the thread process block includes a mechanism that operates only when requested by the scheduler.

**19.** The compiler as claimed in claim 13, **characterized in that** the third stage embeds a mechanism of a timer handler that automatically starts and transmits a signal periodically using a timer function of an operating system of the computer, with respect to the scheduler process block surrounded by an outermost loop.

**20.** The compiler as claimed in claim 13, **characterized in that** the third stage adds a control statement having a function of releasing the computer during a time in which a computation process is unnecessary.

# FIG.1

```
      1
  ┌─────────┐
  │ SOURCE  │
  │  CODE   │
  └─────────┘

  ┌─────────────────┐
  │   FRONT END     │  ～2
  └─────────────────┘
          │
          ▼
  ┌─────────────────┐
  │  INTERMEDIATE   │  ～3-1
  │   LANGUAGE      │
  └─────────────────┘
          │
          ▼
  ┌─────────────────┐
  │  MIDDLE PATH    │  ～4
  └─────────────────┘
          │
          ▼
  ┌─────────────────┐
  │  INTERMEDIATE   │  ～3-2
  │   LANGUAGE      │
  └─────────────────┘
          │
          ▼
  ┌─────────────────┐
  │   BACK END      │  ～5
  └─────────────────┘

                        6
                  ┌───────────┐
                  │ EXECUTION │
                  │   CODE    │
                  └───────────┘
```

FIG.2

# FIG.3

EP 2 093 667 A1

# FIG.4

INFORMATION TABLE *12*

THREAD *11*

*13* DYNAMIC SCHEDULER

*11* THREAD

*11* THREAD

*15*

*16*

*14* CONTEXT SWITCH & PROCESS MANAGEMENT FUNCTION

OS

# FIG.5

# FIG.6

| PROCESS CLASSIFICATION | PROCESS CONTENTS | REPRESENTATION WITHIN SOURCE CODE |
|---|---|---|
| ps1 | SUBSTITUTION COMPUTATION PROCESS | NORMAL MATHEMATICAL FORMULA |
| ps2 | BACK EDGE JUMP | LOOP STRUCTURE |
| ps3 | CONDITIONAL BRANCH | CONDITIONAL BRANCH |
| ps4 | UNCONDITIONAL JUMP | SUBROUTINE CALL |

# FIG.7

# FIG.8

# FIG.9

# FIG.10

START PROCESS WITH
RESPECT TO GROUP OF SUBSTITUTION
COMPUTATION STATEMENTS ALL
SEGMENTED BY CONTROL STATEMENT

EXTRACT DEFINING & REFERRING VARIABLES — St1

DEFINE DEPENDENCY GRAPH — St2

DELETE UNNECESSARY STATEMENT — St3

SORT BASED ON DEPENDENCY GRAPH — St4

# FIG.11

```
        │
        ▼
┌──┬───────────────┬──┐      ┌──────────────────┐
│  │ UNCONDITIONAL │  │─────▶│  SUBSTITUTION    │
│  │     JUMP      │  │◀─────│  COMPUTATION     │
└──┴───────────────┴──┘      └──────────────────┘
        │
        ▼
```

                                                    ┌──────────────────┐
                                                    │    REDEFINED     │
            OR                      ⇒                │  SUBSTITUTION    │
                                                    │   COMPUTATION    │
                                                    │  PROCESS BLOCK   │
                                                    └──────────────────┘

```
        │
        ▼
┌──┬───────────────┬──┐      ┌──────────────────┐
│  │     LOOP      │  │─────▶│  SIMPLE LOOP     │
│  │   PROCESS     │  │      │ BODY FORMED BY   │
│  │               │  │◀─────│  SUBSTITUTION    │
└──┴───────────────┴──┘      │  COMPUTATION     │
        │                    └──────────────────┘
        ▼
```

# FIG.12

SUBSTITUTION COMPUTATION

SUBSTITUTION COMPUTATION

SUBSTITUTION COMPUTATION

COMBINE

SUBSTITUTION COMPUTATION

SUBSTITUTION COMPUTATION

SUBSTITUTION COMPUTATION

COMBINE

SUBSTITUTION COMPUTATION

# FIG.13

SCHEDULER PROCESS BLOCK

THREAD PROCESS BLOCK          THREAD PROCESS BLOCK

FIG.14

EP 2 093 667 A1

# FIG.15

PROCESS NEST
STRUCTURE OF PROGRAM ~ St11
FROM INNERMOST
HIERARCHICAL LEVEL

St12

PROCESS
BLOCK AT CALL
SOURCE ?

CALL FROM
CONDITIONAL BRANCH
YES

NO

REDEFINE DEPENDENT
CLAUSE OF CONDITIONAL
BRANCH AS THREAD ~ St13
PROCESS BLOCK

St14

FOLLOWING
PROCESS BLOCK?

FOLLOW CONDITIONAL
YES BRANCH

NO

COMBINE
WITH FOLLOWING ~ St15
PROCESS BLOCK

REDEFINE AS SCHEDULER ~ St16
PROCESS BLOCK

# FIG.16

THREAD
PROCESS
BLOCK

55

⟹

EVENT PROCESS THREAD

51

WAIT FOR SIGNAL
& RELEASE CPU — 52

EXCLUSIVE LOCK — 53

THREAD BLOCK
PROCESS — 55

RELEASE
EXCLUSIVE LOCK — 54

59

# FIG.17

SCHEDULER PROCESS
BLOCK

65

A                    B

⟹

EP 2 093 667 A1

SCHEDULER PROCESS BLOCK

65

A                    B

ISSUE SIGNAL
WITH RESPECT
TO EVENT
OPERATED WHEN
CONDITION A
STANDS

ISSUE SIGNAL
WITH RESPECT
TO EVENT
OPERATED WHEN
CONDITION B
STANDS

61

61

69

# FIG.18

TIMER SIGNAL FROM OS — 64

DEFINE AS PERIODICAL HANDLER
STARTED BY TIMER

OUTERMOST
SCHEDULER
PROCESS BLOCK

65A

A          B

⟹

65A

A          B

61

61

ISSUE SIGNAL
WITH RESPECT
TO EVENT
OPERATED
WHEN
CONDITION A
STANDS

ISSUE SIGNAL
WITH RESPECT
TO EVENT
OPERATED
WHEN
CONDITION B
STANDS

69A

EP 2 093 667 A1

EP 2 093 667 A1

THREAD PROCESS BLOCK ← TARGET PROCESS BLOCK IS? (St21) → SCHEDULER PROCESS BLOCK

**St22**
SURROUND BY LOOP

**St23**
INSERT SIGNAL WAIT MECHANISM AT INPUT PART OF LOOP

**St24**
DEPENDENCY RELATIONSHIP WITH OTHER THREADS? — NO

YES

**St25**
INSERT EXCLUSIVE CODE

**St26**
INSERT SIGNAL TRANSMITTING MECHANISM AFTER CONDITIONAL BRANCH

**St27**
OUTERMOST SCHEDULER PROCESS BLOCK? — NO

YES

**St28**
EMBED TIMER HANDLER

END

FIG.19

# FIG.20

EP 2 093 667 A1

TIME

OS (TIMER)

SIGNAL

DYNAMIC SCHEDULER

SIGNAL

EVENT PROCESS THREAD ET1

EVENT PROCESS THREAD ET2

SLEEP STATE

# FIG.21

EP 2 093 667 A1

FIG.22

CPU IDLE STATE 82

DYNAMIC
SCHEDULER
CONTEXT SWITCH
FUNCTION 83

THREAD 81

THREAD 81

THREAD 81

SIGNAL 85

85

OS 86

TIMER
FUNCTION 88

PROCESS MANAGEMENT FUNCTION 84

EP 2 093 667 A1

# FIG.23

| | PROGRAM PA (DYNAMIC IMAGE PLAYER) | PROGRAM PB (COMMUNICATION PROCESS) | PROGRAM PC (STILL IMAGE PROCESS) | PROGRAM PD (ARITHMETIC OPERATION) |
|---|---|---|---|---|
| CONVENTIONAL TECHNIQUE<br>CPU LOAD<br>AMOUNT OF MEMORY USED | 100%<br>56 MBytes | 100%<br>35 MBytes | 100%<br>12 MBytes | 100%<br>95 MBytes |
| EMBODIMENT OF INVENTION<br>CPU LOAD<br>AMOUNT OF MEMORY USED<br>POWER CONSUMPTION | 67%<br>36 MBytes<br>70% OF PEAK | 72%<br>20 MBytes<br>75% OF PEAK | 87%<br>11 MBytes<br>95% OF PEAK | 95%<br>95 MBytes<br>100% OF PEAK |
| PROGRAM CHARACTERISTICS | SOFTWARE BASED ON TIME-SEQUENTIAL PROCESS AND OUTPUTTING INTERMEDIATE RESULT AT PREDETERMINED TIMING. | | SOFTWARE EXPANDING COMPRESSED IMAGE OF XGA. LESS EFFECT OF THREADING, BUT EFFECTIVE IN REDUCING STATEMENTS IN FIRST STAGE. | SOFTWARE FOR FLOW COMPUTATIONS ALREADY OPTIMIZED BY PROGRAMMER AT SOURCE CODE LEVEL. |

## INTERNATIONAL SEARCH REPORT

| | International application No. |
| --- | --- |
| | PCT/JP2006/324966 |

**A. CLASSIFICATION OF SUBJECT MATTER**
*G06F9/45*(2006.01)i

According to International Patent Classification (IPC) or to both national classification and IPC

**B. FIELDS SEARCHED**

Minimum documentation searched (classification system followed by classification symbols)
G06F9/45

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
CSDB(Japanese Patent Office)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2001-282549 A (NEC Corp.), 12 October, 2001 (12.10.01), Par. Nos. [0044], [0045], [0048] to [0050], [0064], [0078] to [0089]; Fig. 6 & US 2004/0103410 A1 & US 7010787 B2 | 1,11 |

☐ Further documents are listed in the continuation of Box C. ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>27 December, 2006 (27.12.06) | Date of mailing of the international search report<br>16 January, 2007 (16.01.07) |
| --- | --- |
| Name and mailing address of the ISA/<br>Japanese Patent Office | Authorized officer |
| Facsimile No. | Telephone No. |

Form PCT/ISA/210 (second sheet) (April 2005)

## INTERNATIONAL SEARCH REPORT

| International application No. |
| --- |
| PCT/JP2006/324966 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☒ Claims Nos.: 2-10 and 12-20
   because they relate to parts of the international application that do not comply with the prescribed requirements to such an extent that no meaningful international search can be carried out, specifically:
   (see the extra sheet).

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable,
the                              payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

**INTERNATIONAL SEARCH REPORT**

| | International application No. |
|---|---|
| | PCT/JP2006/324966 |

Continuation of Box No.II-2 of continuation of first sheet(2)

(1) The meaning of the term of the "block" with respect to the "parallel characteristic" described in claim 1 is unclear, and the term in claim 1 is unclear. The same term in claims 2-20 is likewise insufficient in description.

(2) The term of the "parallel characteristic" set forth in claim 1 is contrary to that of "to be processed in a time series", and the description in claim 1 is unclear. The same term in claims 2-20 is likewise insufficient in description.

(3) Claim 1 includes the term to extract the "block" with respect to the "parallel characteristic" but the term is not sufficiently supported by the description. The same term in claims 2-20 is likewise insufficient in description.

(4) The definition of the term of the "restructuring" of the "processing block" in claim 1 is unclear, and the description in claim 1 is unclear. The same term in claims 2-20 are likewise insufficient in description.

(5) The meaning of the term of the "group coupling and redefinition of statements" in claim 2 is unclear, and the description in claim 2 is unclear. The same term in claims 3-10 and 12-20 is likewise insufficient in description.

(6) The term of the "group coupling and redefinition of statements" in claim 2 is not sufficiently supported by the description. The same term in claims 3-10 and 12-20 is likewise insufficient in description.

(7) The meaning of the term of the "redefinition of the dependent clause of the conditional branch" in claim 3 is unclear, and the description in claim 3 is unclear. The same term in claims 4-10 and 13-20 is likewise insufficient in description.

(8) The term of the "redefinition of the dependent clause of the conditional branch" in claim 3 is not sufficiently supported by the description. The same term in claims 4-10 and 13-20 is likewise insufficient in description.

(9) The meaning of the term of the "group coupling of statements and redefinition" in claim 5 is unclear, and the description in claim 5 is unclear. The same term in claims 6, 7 and 15-17 is likewise insufficient in description.

(10) The term of the "group coupling of statements and redefinition" in claim 5 is not sufficiently supported by the description. The same term in claims 6, 7 and 15-17 is likewise insufficient in description.

(11) The meaning of the term of the "processing block is a subject" in claim 6 is unclear, and the description in claim 6 is unclear. The same term in claims 7, 16 and 17 is likewise insufficient in description.

(12) The meaning of the term of the "subsequent processing block follows the conditional branch" in claim 6 is unclear, and the description in claim 6 is unclear. The same term in claims 7, 16 and 17 is likewise insufficient in description.

(13) The term of the "processing for adding a statement is carried out" in claim 7 is unclear because it is unclear what statement is added. The same term in claim 17 is likewise insufficient in description.

Form PCT/ISA/210 (extra sheet) (April 2005)

**EP 2 093 667 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6110688 A
- JP 2003084989 A
- JP 8212070 A